# EUROPEAN PATENT SPECIFICATION

(11) **EP 3 787 123 B1**
(45) Date of publication and mention of the grant of the patent: **18.01.2023**
(21) Application number: 19194135.0
(22) Date of filing: 28.08.2019
(51) Int. Cl.: H02G 15/00, H05K 9/00, H01R 4/64, H01R 13/6592

(54) **CABLE SHIELD CONNECTING ASSEMBLY FOR ELECTRICAL DEVICE AND METHOD FOR SECURING AND GROUNDING A CABLE TO A CYLINDRICAL HOUSING OF AN ELECTRIC ROTARY MOTOR**
KABELABSCHIRMVERBINDUNGSBAUGRUPPE FÜR ELEKTRISCHE GERÄTE UND VERFAHREN ZUR BEFESTIGUNG UND ERDUNG EINES KABELS AN EINEM ZYLINDRISCHEN GEHÄUSE EINES ELEKTRISCHEN ROTATIONSMOTORS
ENSEMBLE DE CONNEXION DE BLINDAGE DE CABLE POUR DISPOSITIF ÉLECTRIQUE ET PROCÉDÉ DE FIXATION ET DE MISE A LA TERRE D'UN CABLE A UN BOÎTIER CYLINDRIQUE D'UN MOTEUR ÉLECTRIQUE ROTATIF

(43) Date of publication of application: 03.03.2021
(73) Proprietor: ETEL S.A., 2112 Môtiers (CH)
(72) Inventor: Garcia-Herreros, Ivan, 2123 St. Sulpice (CH); Chechenev, Dmitry, 2000 Neuchâtel (CH)
(74) Representative: P&TS SA (AG, Ltd.)

(56) References cited:
- GB-A- 2 346 742
- US-A- 3 646 496
- US-A- 5 170 008

## Description

### Field of the invention

The present invention relates in general to a cable shield connecting assembly for securing and grounding cables to the housing of an electrical device and in particular for securing and grounding motor cables to the housing of an electric rotary motor. The present invention also relates to a method for securing and grounding motor cables to the housing of an electric rotary motor.

### Background of the invention

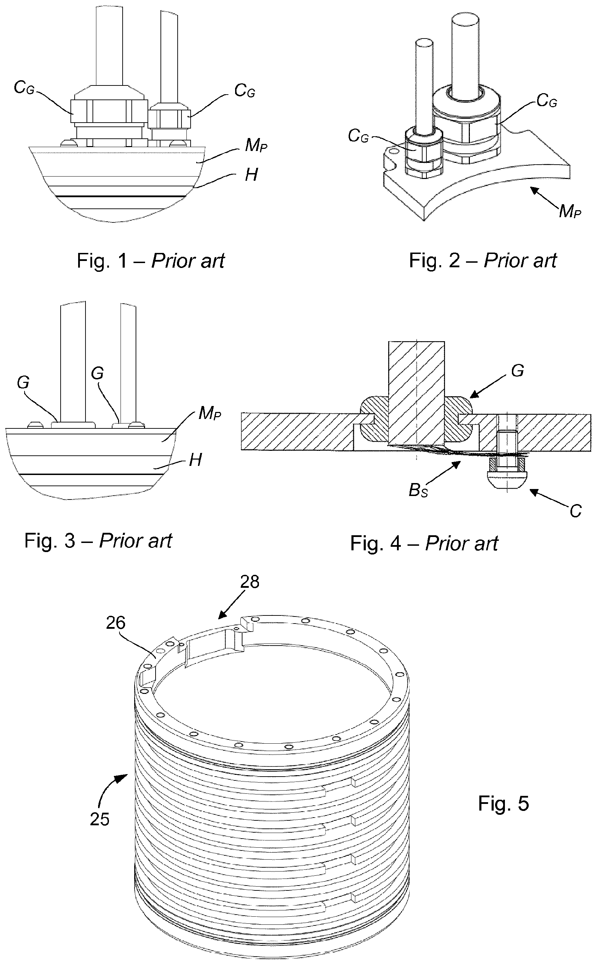

Cables are conventionally connected to the housing of electrical devices using cable glands of the type shown in Figure 1 and disclosed for example in EP0203263 and CA1179029. Cable glands *C_{G}* not only provide mechanical assembly of the cables to the housing of electrical devices but can also be used for cable shield grounding to the housing *H* of the electrical devices. However, in electric rotary motors for example, cable glands are screwed to a mounting plate *Mp* which is then fixed in a cut-out portion 28 provided on an upper ring 26 of a cylindrical housing 25 as shown in Figure 5. The mounting plate *Mp* requires a certain thickness to ensure a robust connection with the cable glands. In addition, shielding the cable through a cable gland is a rather laborious operation since the braided shielding must be adjusted and fixed inside the cable gland and excess braided shielding must be cut manually thereafter. Moreover, cable glands are expensive.

Grommets of the type shown in Figure 3 and disclosed for example in US4905940 and DE19701959 have been used to mitigate the above disadvantages of the cable glands as they offer a more compact solution at a reduced cost. Grommets *G* are also assembled to a mounting plate *Mp* which is then fixed in the cut-out portion 28 of the upper ring 26 of the electric motor housing 25 of Figure 5.

However, as shown in Figure 4, braided shielding needs to be grounded somehow to the housing *H* of the electric rotary motor for electrical safety as the grommet *G* is made of insulating material. A clamp shielding fixation is therefore required, whereby a clamp C is screwed against a side of the mounting plate *M_{P}* to squeeze therebetween braided shielding *Bs* to ensure proper grounding of the cables. The clamp shielding fixation protrudes downwardly inside the motor housing once the mounting plate *Mp* is fixed in the cut-out portion 28 of the electric motor housing 25. This protruding part is detrimental to the size of the motor since a minimum distance between adjacent metal portions within the housing is required for electrical safety reasons.

GB2346742 describes a method for EMC screening of a cable connection to an electrical apparatus that includes an enclosure defining an opening for the cable.

US5170008 describes a grommet providing a surrounding conductive elastomer connection to a stripped portion of an external cable shield.

US3646496 describes an electrical cable connector for attachment with a shielded conductor cable.

An aim of the present invention is therefore to provide a cable shield connecting assembly for securing and grounding a cable to the housing of an electrical device, in particular to the housing of an electric rotary motor, which addresses the above problems.

More particularly, an aim of the present invention is to provide a cable shield connecting assembly which has a more compact configuration over the above-described cable fixations.

Another aim of the present invention is to provide a cable shield connecting assembly which is easier to assemble over the above-described cable fixations.

Another aim of the present invention is to provide a cable shield connecting assembly at a reduced cost.

A further aim of the present invention is to provide a method for securing and grounding motor cables to an electric rotary motor.

### Brief summary of the invention

These aims are achieved by a cable shield connecting assembly for securing and grounding a cable to the housing of an electrical device. The cable comprises a cable jacket and braided shielding extending from an end portion of the cable jacket. The cable shield connecting assembly comprises
- a mounting plate having a cavity and an aperture arranged on a bottom side of the cavity, and
- a grommet having an inner diameter adapted to receive the end portion of the cable jacket, and upper and lower portions extending on both sides of an edge of the aperture of the mounting plate, wherein the upper portion of the grommet is fitted inside said cavity.
The cable shield connecting assembly further comprises a clamp adapted to be pressed-fitted against the upper portion of the grommet inside the cavity to squeeze therebetween said braided shielding.

In an embodiment, the clamp comprises a chamfer adapted to be press-fitted against the upper portion of the grommet.

In an embodiment, the grommet comprises two radially extending flanges resting on a circular edge of the aperture.

In an embodiment, the clamp is a washer.

In an embodiment, the mounting plate comprises a fixing portion configured to be fixed inside a cut-out portion of a cylindrical housing of an electric rotary motor and a cable receiving portion configured to extend radially inwardly inside said cylindrical housing.

Another aspect of the invention relates to an electric rotary motor comprising a cylindrical housing having a cut-out portion inside which the cable shield connecting assembly as described above is mounted by means of the mounting plate.

In an embodiment, the fixing portion of the mounting plate is mounted inside said cut-out portion while the cable receiving portion of the mounting plate extends radially inwardly inside the cylindrical housing.

Another aspect of the invention relates to a method of securing and grounding a cable to a cylindrical housing of an electric rotary motor. The method comprising the following steps:
- securing a grommet to a mounting plate comprising a cavity and an aperture arranged on a bottom side of said cavity, wherein an upper and a lower portion of the grommet extend on both sides of an edge of the aperture with the upper portion of the grommet fitted inside the cavity of the mounting plate,
- providing a cable comprising a cable jacket and braided shielding extending from an end portion of the cable jacket,
- adjusting said cable jacket along the inner diameter of the grommet such that said braided shielding extends inside and outside said cavity,
- adjusting and press-fitting a clamp inside said cavity against the upper portion of the grommet, thereby cutting the excess length of the braided shielding , and
- fixing the mounting plate to the cylindrical housing of the electric rotary motor.

In an embodiment, the clamp is a washer with an outer diameter slightly larger than the diameter of the cavity.

In an embodiment, the cylindrical housing comprises an upper ring having a cut-out portion inside which is mounting a fixing portion of the mounting plate. The mounting plate comprises a cable receiving portion extending radially inwardly inside the cylindrical housing.

### Brief description of the drawings

The invention will be better understood with the aid of the description of an embodiment and illustrated by the figures, in which:
- Figure 1 shows an elevation view of cable glands assembled to a mounting plate screwed on a housing ring of an electric rotary motor according to the prior art;
- Figure 2 shows a perspective view of the cable glands and the mounting plate of Figure 1,
- Figure 3 shows an elevation view of grommets assembled to a mounting plate screwed on a cylindrical housing of an electric rotary motor according to the prior art;
- Figure 4 shows a cross-sectional view of a grommet and the mounting plate of Figure 3,
- Figure 5 shows a perspective view of an electric motor housing comprising a cut-out portion on an upper side for receiving a mounting plate of a cable shield connecting assembly according to an embodiment of the invention,
- Figures 6 shows a perspective view of the cable shield connecting assembly according to an embodiment of the invention,
- Figure 7 shows a cross-sectional view of Figure 6 across one cavity of a mounting plate before assembly of a washer against a grommet,
- Figure 8 shows a similar view of Figure 7 after assembly of the washer against the grommet, and
- Figure 9 shows a partial bottom view of the cable shield connecting assembly of Figure 6 with a cross-section of the mounting plate across one cavity.

### Detailed description of an embodiment of the invention

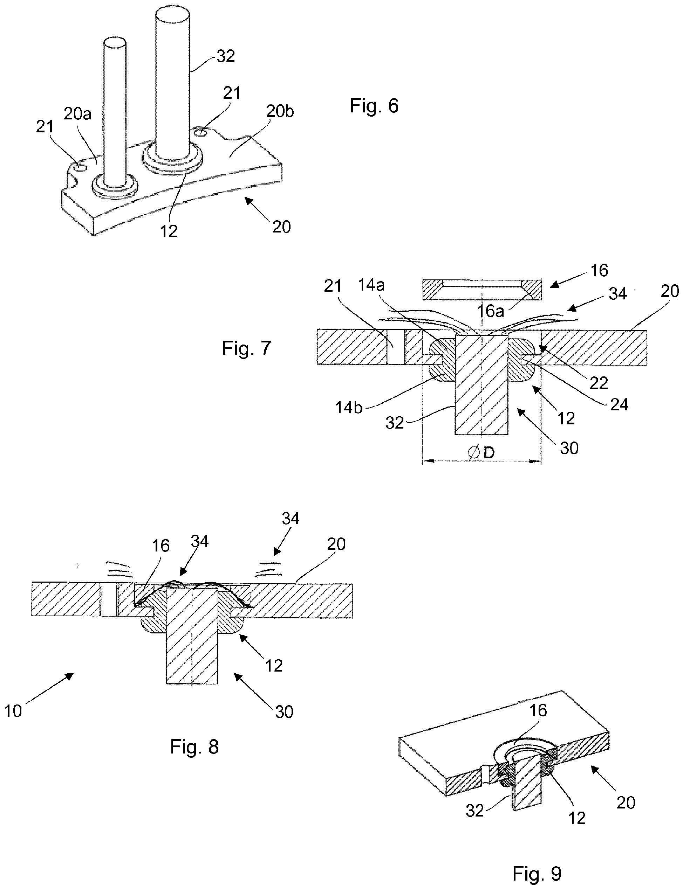

The cable shield connecting assembly 10 as shown in Figures 6 to 9 is configured to mechanically assemble and ground a cable 30 to a mounting plate 20. The mounting plate 20 comprises a fixing portion 20a comprising screw holes 21 and a cable receiving portion 20b comprising a circular cavity 22 with a circular opening 24 located on a bottom side of the circular cavity 22.

The cable 30 comprises a cable jacket 32 and braided shielding 34 having inner cores and extending from an end portion of the cable jacket 32. The cable shield connecting assembly 10 comprises a grommet 12 having an upper and a lower portion 14a, 14b. These portions are configured to extend on both sides of an edge of the circular opening 24 of the mounting plate 20 in order to secure the grommet 12 to the mounting plate 20, wherein the upper portion 14a of the grommet 12 is fitted inside the cavity 22 of the mounting plate 20.

The grommet 12 comprises an inner diameter inside which the cable jacket 32 of the cable 30 is adjusted such that the braided shielding 34 extends inside and outside the circular cavity 22 of the mounting plate 20. A clamp 16, which may be for example a washer, is mounted inside the circular cavity 22. The outer diameter of the washer 16 is slightly larger than the diameter of the circular cavity 22 such that the washer16 may be press-fitted inside the cavity in order to firmly fix the upper portion 14a of the grommet 12 inside the cavity.

The washer 16 comprises a chamfer 16a on a portion of its inner diameter. The chamfer 16a is designed to press against the upper portion 14a of the grommet 12 to create electrical contact with the braided shielding 34 and deform the grommet 12 to seal the cable end portion.

When the washer 16 is press-fitted inside the circular cavity 22, the outer edge of the washer 16 and the circular cavity 22 are sharp enough to cut the excess length of the braided shielding 34, thereby reducing labor cost. The fixing portion 20a of the mounting plate 20 is then fixed by means of screws inside a cut-out portion 28 provided on an upper ring 26 of a cylindrical housing 25 of an electric rotary motor as shown in Figure 5. The cable receiving portion 20b extends radially inwardly inside the cylindrical housing 25 of the electric rotary motor.

The cable shield connecting assembly 10 as described above provides several advantages. The cost for securing and grounding the cable end portion is reduced as the machining of additional elements, for example threaded holes for securing the cable end portion to the mounting plate 20, is removed. The washer may be made using for example a Swiss lathe, thereby reducing the cost of the washer.

In addition, the clamp C of Figure 4 for grounding the cable to the mounting plate is removed. Removing the clamp C inside the motor housing allows to either make cabling inside the motor housing easier to perform, reduce the height of the motor, or add further laminations to the motor to improve its performance.

Various modifications may be brought to the cable shield connecting assembly 10 as described above without departing from the scope of the appended claims. For example, the cavity 22 does not need to be circular and may have for instance a square shape. In that case, the clamping function is achieved by press-fitting a clamp of a corresponding outer shape rather than using a washer.

### Reference list

### Cable shield connecting assembly 10

Grommet 12
   Inner diameter
   First and second radially extending flanges 14a, 14b
Clamp 16
   Washer
   Inner diameter
   Chamfer 16a
Mounting plate 20
   Fixing portion 20a
      Screw holes 21
   Cable receiving portion 20b
      Cavity 22
         Circular cavity
      Aperture 24
         Circular opening
**Electrical device**
   Cylindrical housing 25
   Upper ring 26
   Cut-out portion 28
**Electrical cable 30**
   Cable jacket 32
   Braided shielding 34
      Inner cores

## Claims

1. Cable shield connecting assembly (10) for securing and grounding a cable (30) to the housing of an electrical device,
the cable (30) comprising a cable jacket (32) and braided shielding (34) extending from an end portion of the cable jacket (32),
wherein the cable shield connecting assembly (10) comprises
- a mounting plate (20) having a cavity (22) and an aperture (24) arranged on a bottom side of the cavity (22), and
- a grommet (12) having an inner diameter adapted to receive the end portion of the cable jacket (32), and upper and lower portions (14a, 14b) extending on both sides of an edge of the aperture (24) of the mounting plate (20),
**characterized in that** the upper portion (14a) of the grommet (12) is fitted inside the cavity (22), wherein the cable shield connecting assembly (10) further comprises a clamp (16) adapted to be pressed-fitted against the upper portion (14a) of the grommet (12) inside said cavity (22) to squeeze therebetween said braided shielding (34).

2. Cable shield connecting assembly (10) according to the preceding claim, wherein the clamp (16) comprises a chamfer (16a) adapted to be press-fitted against the upper portion (14a) of the grommet (12).

3. Cable shield connecting assembly (10) according to any preceding claim, wherein the grommet (12) comprises two radially extending flanges resting on a circular edge of the aperture (24).

4. Cable shield connecting assembly (10) according to the preceding claim, wherein the clamp is a washer (16).

5. Cable shield connecting assembly (10) according to any preceding claim, wherein the mounting plate (20) comprises a fixing portion (20a) configured to be fixed inside a cut-out portion (28) of a cylindrical housing of an electric rotary motor and a cable receiving portion (20b) configured to extend radially inwardly inside said cylindrical housing.

6. Electric rotary motor comprising a cylindrical housing having a cut-out portion (28) inside which the cable shield connecting assembly according to the preceding claim is mounted by means of the mounting plate (20).

7. Electric rotary motor according to the preceding claim, wherein the fixing portion (20a) of the mounting plate (20) is mounted inside said cut-out portion (28) while the cable receiving portion (20b) of the mounting plate (28) extends radially inwardly inside the cylindrical housing (25).

8. Method of securing and grounding a cable to a cylindrical housing of an electric rotary motor, comprising the steps of:
- securing a grommet (12) to a mounting plate (20) comprising a cavity (22) and an aperture (24) arranged on a bottom side of said cavity (22), wherein an upper and a lower portion (14a, 14b) of the grommet extend on both sides of an edge of the aperture (24) with said upper portion (14a) fitted inside the cavity (22) of the mounting plate,
- providing a cable (30) with a cable jacket (32) and braided shielding (34) extending from an end portion of the cable jacket (32),
- adjusting said cable jacket (32) along the inner diameter of the grommet (12) such that said braided shielding (34) extends inside and outside said cavity (22),
- adjusting and press-fitting a clamp (16) inside said cavity (22) against the upper portion (14a) of the grommet (12), thereby cutting the excess length of the braided shielding (34) , and
- fixing the mounting plate (28) to the cylindrical housing of the electric rotary motor.

9. Method according to the preceding claim, wherein the clamp is a washer (16) with an outer diameter slightly larger than the diameter of the cavity.

10. Method according to claim 8 or 9, wherein the cylindrical housing (25) comprises an upper ring (26) having a cut-out portion (28) inside which is mounting a fixing portion (20a) of the mounting plate (20), said mounting plate (20) comprising a cable receiving portion (20b) extending radially inwardly inside the cylindrical housing.

## Patentansprüche

1. Kabelabschirmungs-Verbindungsbaugruppe (10) zum Befestigen und Erden eines Kabels (30) am Gehäuse eines elektrischen Geräts,
wobei das Kabel (30) einen Kabelmantel (32) und eine geflochtene Abschirmung (34) umfasst, die sich von einem Endabschnitt des Kabelmantels (32) erstreckt, die Kabelabschirmungs-Verbindungsbaugruppe (10) Folgendes umfassend:
- eine Montageplatte (20) mit einem Hohlraum (22) und einer Öffnung (24), die an einer Unterseite des Hohlraums (22) angeordnet ist, und
- eine Tülle (12) mit einem Innendurchmesser, der ausgebildet ist, den Endabschnitt des Kabelmantels (32) aufzunehmen, und einem oberen und einem unteren Abschnitt (14a, 14b), die sich auf beiden Seiten eines Randes der Öffnung (24) der Montageplatte (20) erstrecken, **dadurch gekennzeichnet, dass** der obere Abschnitt (14a) der Tülle (12) in den Hohlraum (22) eingepasst ist, wobei die Kabelabschirmungs-Verbindungsbaugruppe (10) ferner eine Klemme (16) umfasst, die so beschaffen ist, dass sie gegen den oberen Abschnitt (14a) der Tülle (12) im Inneren des Hohlraums (22) gepresst werden kann, um die geflochtene Abschirmung (34) dazwischen zu quetschen.

2. Kabelschirm-Verbindungsbaugruppe (10) nach dem vorhergehenden Anspruch, wobei die Klemme (16) eine Abschrägung (16a) aufweist, die ausgebildet ist, gegen den oberen Abschnitt (14a) der Tülle (12) gepresst zu werden.

3. Kabelabschirmungs-Verbindungsbaugruppe (10) nach einem der vorhergehenden Ansprüche, wobei die Tülle (12) zwei sich radial erstreckende Flansche aufweist, die auf einem kreisförmigen Rand der Öffnung (24) aufliegen.

4. Kabelabschirmungs-Verbindungsbaugruppe (10) nach dem vorhergehenden Anspruch, wobei die Klemme eine Unterlegscheibe (16) ist.

5. Kabelabschirmungs-Verbindungsbaugruppe (10) nach einem der vorhergehenden Ansprüche, wobei die Montageplatte (20) einen Befestigungsabschnitt (20a) umfasst, der so ausgebildet ist, dass er innerhalb eines Aussparungsabschnitts (28) eines zylindrischen Gehäuses eines elektrischen Rotationsmotors befestigt werden kann, und einen Kabelaufnahmeabschnitt (20b) umfasst, der so ausgebildet ist, dass er sich radial nach innen innerhalb des zylindrischen Gehäuses erstreckt.

6. Elektrischer Rotationsmotor mit einem zylindrischen Gehäuse, das einen Aussparungsabschnitt (28) aufweist, in dem die Kabelschirmanschlussbaugruppe nach dem vorhergehenden Anspruch mit Hilfe der Montageplatte (20) montiert ist.

7. Elektrischer Rotationsmotor nach dem vorhergehenden Anspruch, wobei der Befestigungsabschnitt (20a) der Montageplatte (20) innerhalb des Aussparungsabschnitts (28) angebracht ist, während sich der Kabelaufnahmeabschnitt (20b) der Montageplatte (28) radial nach innen in das zylindrische Gehäuse (25) erstreckt.

8. Verfahren zur Befestigung und Erdung eines Kabels an einem zylindrischen Gehäuse eines elektrischen Rotationsmotors, das die folgenden Schritte umfasst:
- Befestigen einer Tülle (12) an einer Montageplatte (20), die einen Hohlraum (22) und eine Öffnung (24) aufweist, die an einer Unterseite des Hohlraums (22) angeordnet ist, wobei sich ein oberer und ein unterer Abschnitt (14a, 14b) der Tülle auf beiden Seiten eines Rands der Öffnung (24) erstrecken, wobei der obere Abschnitt (14a) in den Hohlraum (22) der Montageplatte eingepasst ist,
- Bereitstellen eines Kabels (30) mit einem Kabelmantel (32) und einer geflochtenen Abschirmung (34), die sich von einem Endabschnitt des Kabelmantels (32) erstreckt,
- Anpassen des Kabelmantels (32) entlang des Innendurchmessers der Tülle (12), so dass sich die geflochtene Abschirmung (34) innerhalb und außerhalb des Hohlraums (22) erstreckt,
- Einstellen und Einpressen einer Klemme (16) innerhalb des Hohlraums (22) gegen den oberen Abschnitt (14a) der Tülle (12), wodurch die überschüssige Länge der geflochtenen Abschirmung (34) abgeschnitten wird, und
- Befestigen der Montageplatte (28) an dem zylindrischen Gehäuse des elektrischen Rotationsmotors.

9. Verfahren nach dem vorhergehenden Anspruch, wobei die Klemme eine Unterlegscheibe (16) ist, deren Außendurchmesser etwas größer ist als der Durchmesser des Hohlraums.

10. Verfahren nach Anspruch 8 oder 9, wobei das zylindrische Gehäuse (25) einen oberen Ring (26) mit einem Aussparungsabschnitt (28) aufweist, in dem ein Befestigungsabschnitt (20a) der Montageplatte (20) angebracht ist, wobei die Montageplatte (20) einen Kabelaufnahmeabschnitt (20b) aufweist, der sich radial nach innen in das zylindrische Gehäuse erstreckt.

## Revendications

1. Ensemble de connexion de blindage de câble (10) pour fixer et mettre à la terre un câble (30) sur le boîtier d'un dispositif électrique,
le câble (30) comprenant une gaine de câble (32) et un blindage tressé (34) s'étendant depuis une partie d'extrémité de la gaine de câble (32),
dans lequel l'ensemble de connexion de blindage de câble (10) comprend
- une plaque de montage (20) ayant une cavité (22) et une ouverture (24) disposée sur un côté inférieur de la cavité (22), et
- un passe-câble (12) ayant un diamètre intérieur adapté pour recevoir la partie d'extrémité de la gaine de câble (32), et des parties supérieure et inférieure (14a, 14b) s'étendant sur les deux côtés d'un bord de l'ouverture (24) de la plaque de montage (20),
**caractérisé en ce que** la partie supérieure (14a) du passe-câble (12) est ajustée à l'intérieur de la cavité (22), dans lequel l'ensemble de connexion de blindage de câble (10) comprend en outre une pièce de serrage (16) adaptée pour être ajustée par pression contre la partie supérieure (14a) du passe-câble (12) à l'intérieur de ladite cavité (22) pour comprimer entre eux ledit blindage tressé (34).

2. Ensemble de connexion de blindage de câble (10) selon la revendication précédente, dans lequel la pièce de serrage (16) comprend un chanfrein (16a) adapté pour être ajusté par pression contre la partie supérieure (14a) du passe-câble (12).

3. Ensemble de connexion de blindage de câble (10) selon l'une quelconque des revendications précédentes, dans lequel le passe-câble (12) comprend deux flasques s'étendant radialement et reposant sur un bord circulaire de l'ouverture (24).

4. Ensemble de connexion de blindage de câble (10) selon la revendication précédente, dans lequel la pièce de serrage est une rondelle (16).

5. Ensemble de connexion de blindage de câble (10) selon l'une quelconque des revendications précédentes, dans lequel la plaque de montage (20) comprend une partie de fixation (20a) configurée pour être fixée à l'intérieur d'une partie découpée (28) d'un boîtier cylindrique d'un moteur électrique rotatif et une partie de réception de câble (20b) configurée pour s'étendre radialement vers l'intérieur dudit boîtier cylindrique.

6. Moteur électrique rotatif comprenant un boîtier cylindrique (25) ayant une partie découpée (28) à l'intérieur de laquelle l'ensemble de connexion de blindage de câble selon la revendication précédente est monté au moyen de la plaque de montage (20).

7. Moteur électrique rotatif selon la revendication précédente, dans lequel la partie de fixation (20a) de la plaque de montage (20) est montée à l'intérieur de ladite partie découpée (28) tandis que la partie de réception de câble (20b) de la plaque de montage (20) s'étend radialement vers l'intérieur du boîtier cylindrique (25).

8. Procédé de fixation et de mise à la terre d'un câble sur un boîtier cylindrique d'un moteur électrique rotatif, comprenant les étapes consistant à :
- fixer un passe-câble (12) à une plaque de montage (20) comprenant une cavité (22) et une ouverture (24) disposée sur un côté inférieur de ladite cavité (22), dans lequel une partie supérieure et une partie inférieure (14a, 14b) du passe-câble s'étendent sur les deux côtés d'un bord de l'ouverture (24), ladite partie supérieure (14a) étant ajustée à l'intérieur de la cavité (22) de la plaque de montage,
- fournir un câble (30) avec une gaine de câble (32) et un blindage tressé (34) s'étendant depuis une partie d'extrémité de la gaine de câble (32),
- ajuster ladite gaine de câble (32) le long du diamètre intérieur du passe-câble (12) de sorte que ledit blindage tressé (34) s'étende à l'intérieur et à l'extérieur de ladite cavité (22),
- ajuster et fixer par pression une pièce de serrage (16) à l'intérieur de ladite cavité (22) contre la partie supérieure (14a) du passe-câble (12), coupant ainsi la longueur excédentaire du blindage tressé (34), et
- fixer la plaque de montage (20) au boîtier cylindrique du moteur électrique rotatif.

9. Procédé selon la revendication précédente, dans lequel la pièce de serrage est une rondelle (16) avec un diamètre extérieur légèrement plus grand que le diamètre de la cavité.

10. Procédé selon la revendication 8 ou 9, dans lequel le boîtier cylindrique (25) comprend une bague supérieure (26) ayant une partie découpée (28) à l'intérieur de laquelle est montée une partie de fixation (20a) de la plaque de montage (20), ladite plaque de montage (20) comprenant une partie de réception de câble (20b) s'étendant radialement vers l'intérieur du boîtier cylindrique.
